# EUROPÄISCHE PATENTANMELDUNG

(11) **EP 4 382 837 A1**
(43) Veröffentlichungstag der Anmeldung: **12.06.2024**
(21) Anmeldenummer: 23214879.1
(22) Anmeldetag: 07.12.2023
(51) Int. Cl.: F25D 3/08, A47G 19/22, A47J 41/00

(54) **KÜHLVORRICHTUNG UND TRINKGEFÄSS DAMIT**

(30) Priorität: 07.12.2022 DE 102022132562; 18.04.2023 DE 102023109721
(71) Anmelder: Linke, René, 10115 Berlin (DE)
(72) Erfinder: Linke, René, 10115 Berlin (DE)
(74) Vertreter: Lippert Stachow Patentanwälte Rechtsanwälte Partnerschaft mbB

(57) **Zusammenfassung**

Erfindungsgemäß ist eine Kühlvorrichtung zum Einsetzen in einen verschließbaren Behälter (1), die Kühlvorrichtung umfassend
• ein Grundgestell (2) aufweisend einen Haltering (3) mit einem ersten Außendurchmesser, welcher ausgebildet ist zum Anlegen an eine innere Behälterwand (1.1) des verschließbaren Behälters (1), und
• wenigstens einen Kühlkörper (4), welcher zur Aufnahme eines Kühlmittels (5) ausgebildet ist,
wobei das Grundgestell (2) den Kühlkörper (4) aufnehmend gestaltet ist.
Weiterhin erfindungsgemäß ist ein Trinkgefäß umfassend

• einen Behälter (1) zur Aufnahme einer Flüssigkeit, der Behälter (1) aufweisend einen Behälterboden (1.2), eine sich von dem Behälterboden (1.2) nach oben erstreckende Behälterwand (1.1), welche einen Innenraum des Behälters (1) umschließt, und eine Öffnung zum Befüllen des Behälters (1) mit einer Flüssigkeit,
• einen Deckel (9) zum Verschließen des Behälters (1), sowie
• eine erfindungsgemäße Kühlvorrichtung,
wobei die Kühlvorrichtung derart in dem Behälter (1) befestigt ist, dass der Kühlkörper (4) in einem Abstand von wenigstens 0,5 cm, bevorzugt wenigstens 1 cm zu der Behälterwand (1.1) in dem Innenraum des Behälters (1) angeordnet ist. (Fig. 1)

## Beschreibung

Die vorliegende Erfindung betrifft eine Kühlvorrichtung, insbesondere zum Einsetzen in einen verschließbaren Behälter, sowie ein Trinkgefäß, aufweisend eine derartige Kühlvorrichtung.

Proteinshaker weisen in der Regel einen becherförmigen Flüssigkeitsaufnahmebehälter auf, der üblicherweise mittels eines Gewindes mit einem Deckel mit verschließbarer Trinköffnung fest verschraubt wird. Behälter und Deckel können sowohl aus Kunststoff als auch aus thermisch isolierendem Material wie Edelstahl gefertigt sein. Darüber hinaus verfügen Proteinshaker über eine Vorrichtung, welche die Durchmischung von Flüssigkeit, Proteinpulver oder sonstiger Nahrungsergänzungsmittel und ggf. weiteren Zutaten bewirkt. Üblich sind dafür entweder ein flacher, siebähnlicher Körper, welcher im Behälter oder am Deckel befestigt ist, oder ein frei beweglicher Körper aus Metall oder Kunststoff. Durch Schütteln des verschlossenen Trinkgefäßes vermischen sich Flüssigkeit und Nahrungsergänzungsmittel zu einem möglichst homogenen Getränk.

Derartige Flüssigkeitsaufnahmebehälter besitzen in der Regel ein Fassungsvermögen von 500 - 800 ml. Die darin aufbewahrten Getränke werden üblicherweise aus 250 - 600 ml Flüssigkeit (am verbreitetsten ist Kuhmilch, aber auch Nussmilch, Hafermilch oder Wasser sind denkbar) und ein bis drei Esslöffeln eines Nahrungsergänzungsmittels sowie ggf. weiteren Zutaten hergestellt.

Da die Hersteller proteinreicher Nahrungsergänzungsmittel eine Einnahme direkt nach dem Setzen des Trainingsreizes (Muskeltraining) empfehlen, die Zubereitung des Proteinshakes jedoch in der Regel vor dem Training (meist auch räumlich getrennt, beispielsweise zuhause) stattfindet, kommt es regelmäßig zu einer Standzeit des Getränkes von mehreren Stunden, wobei sich das Getränk auf die Umgebungstemperatur erwärmt. Obwohl das Getränk aus geschmacklichen Gründen und um dem Verderben vorzubeugen vorzugsweise gekühlt konsumiert wird, ist nach dem bisherigen Stand der Technik keine Vorrichtung zur aktiven Kühlung eines Getränks in einem Trinkgefäß bekannt. Da den Sportlern während des Trainings in der Regel keine externe Kühlmöglichkeit zur Verfügung steht, kommen nach dem Stand der Technik nur die folgenden Möglichkeiten in Betracht:
- Die Verwendung eines Trinkgefäßes aus thermisch isolierendem Material, welches die Erwärmung zwar verzögert, das Getränk jedoch nicht aktiv kühlt.
- Das Hinzugeben von Kühlmedien, wie Eiswürfeln, welche zunächst die Durchmischung von Flüssigkeit und Protein erschweren und beim Schmelzen die Trinkflüssigkeit verwässern.
- Das Hinzugeben "wiederverwendbarer" Eiswürfel, beispielsweise aus Kunststoff, welche die Trinkflüssigkeit nicht verwässern, jedoch beim notwendigen Schütteln des Trinkgefäßes gegen die Gefäßwand schlagen, was zu unerwünschten Geräuschen und zur Materialabnutzung des Trinkgefäßes führt. Ein Beispiel dafür wird in der DE 20 2004 018 153 U1 offenbart. Es wird ein Kühlelement in Würfelform beschrieben, wobei die Befüllung mit Wasser direkt im Formnest des Spritzgusswerkzeuges erfolgt in unmittelbarer Verbindung mit einem mediumdichten Verschließen der Kunststoffaußenhaut.

Die US 2006/0255035 A1 offenbart einen Getränkeshaker, bestehend aus einem isolierten Behälter, der zur Aufnahme der Zutaten für Eiweißergänzungsgetränke ausgelegt ist. Der Shaker ermöglicht das manuelle Mischen durch Hin- und Herschütteln und hält große Stücke des verbleibenden Eises innerhalb des Behälters zurück. Der Shaker hat ein abnehmbares Oberteil, das an dem Behälter befestigt ist und eine glatte Umfangslippe aufweist, die den Behälter umgibt und zum Trinken geeignet ist. Ein Sieb wird im Inneren von dem oberen Teil getragen und ist so gestaltet, dass es große Eisstücke zurückhält. Ein Deckel ist innen mit dem oberen Teil auslaufsicher verbunden, so dass die Bestandteile des Eiweißergänzungsgetränks direkt aus dem Shaker gemischt und konsumiert werden können, wenn der Deckel entfernt wird.

Ein Shaker für fließfähige Lebensmittel mit einem umkehrbaren Mischeinsatz wird in der US5547275A beschrieben. Der Mischeinsatz ist in die sich nach oben öffnende, vergrößerte Mündung des Shakergefäßes einsetzbar und wird in beiden Stellungen durch eine darüberliegende, lösbare, mit Schnappverschluss versehene Ausgießtülle gehalten, wobei die Anordnung durch eine darüberliegende Gewindekappe verschlossen ist. Der Mischeinsatz bildet in einer ersten Stellung einen Filter zum Zurückhalten von vergrößertem Material während des Ausgießens und in der zweiten Stellung in Verbindung mit der Ausgießtülle eine vergrößerte obere Mischkammer.

In der US 2004/0040962 A1 wird ein isolierter Getränkebehälter beschrieben. Der Getränkebehälter weist einen Becher, eine Griffanordnung mit einem Kragen, der an der Oberseite des Bechers befestigt ist, und eine Deckelanordnung mit Ventil auf. Der Becher hat eine mehrwandige Konstruktion, wobei die beiden inneren Wände ein Isoliervolumen dazwischen definieren, das teilweise evakuiert werden kann. Die Deckelanordnung mit Ventil umfasst ein nach oben vorgespanntes Ventil in der Nähe der Oberseite der Deckelanordnung, das aus einer geschlossenen Position, in der das Ventil an einem Ventilsitz in der Deckelanordnung anliegt, in eine offene Position bewegt werden kann, in der das Ventil vom Ventilsitz beabstandet ist. Ein rutschfester Boden mit integrierten, sich nach oben erstreckenden Griffelementen bietet einen Griff, um die Handhabung des Bechers zu erleichtern.

Die DE 20 2007 019 118 U1 offenbart ein Trinkgefäß, insbesondere eine Babyflasche oder ein Getränkefass, wobei das Gefäß eine Wandung sowie mindestens ein Element mit zusätzlichen Flächen aufweist, mit denen der Wärmeaustausch zwischen einem Inhalt des Gefäßes und einem Kühlmedium, insbesondere Kühlwasser, verstärkt wird, wobei die zusätzlichen Flächen eine Gesamtfläche von mindestens 50%, vorzugsweise mindestens 70% der für den Wärmeaustausch zur Verfügung stehenden Fläche der Wandung des Gefäßes aufweisen.

Schließlich offenbart die DE 20 2021 003 734 U1 ein Trinkgefäß mit einem Flüssigkeitsaufnahmebehälter und einem Standfuß oder Standfußabschnitt gekennzeichnet durch einen Kühlbehälter, der separat zum Flüssigkeitsaufnahmebehälter am Trinkgefäß fixiert oder ausgebildet ist, derart, dass ein Temperaturaustausch zwischen einer Trinkflüssigkeit im Flüssigkeitsaufnahmebehälter und einem Kühlmedium im Kühlbehälter ermöglicht ist.

Ausgehend von dem allgemein bekannten Stand der Technik, ist es die Aufgabe der vorliegenden Erfindung, eine Kühlvorrichtung zum Einsetzen in einen verschließbaren Behälter, insbesondere für die Anwendung in einem Trinkgefäß der einschlägigen Gattung ("Proteinshaker"), bereitzustellen, welche die vorstehend genannten Nachteile des Stands der Technik überwindet oder zumindest verringert, indem sie eine aktive Kühlung der Flüssigkeit bewirkt.

Die Aufgabe wird durch die Merkmale der unabhängigen Patentansprüche 1 und 12 gelöst. Weitere zweckmäßige Ausgestaltungen der Erfindung sind Gegenstand der abhängigen Patentansprüche.

Zur Lösung dieser Aufgabe wird eine Kühlvorrichtung zum Einsetzen in einen verschließbaren Behälter vorgeschlagen, die Kühlvorrichtung umfassend
- ein Grundgestell aufweisend einen Haltering mit einem ersten Außendurchmesser, welcher ausgebildet ist zum Anlegen an eine innere Behälterwand des verschließbaren Behälters, und
- wenigstens einen Kühlkörper, welcher zur Aufnahme eines Kühlmittels ausgebildet ist,
wobei das Grundgestell den Kühlkörper aufnehmend gestaltet ist.

Der verschließbare Behälter kann beispielsweise zur Aufnahme von Speisen und/oder Getränken ausgebildet sein.

Vorteilhafterweise ist der Haltering in seiner Form an die Form des Querschnitts der inneren Behälterwand angepasst oder anpassbar. Es kann vorgesehen sein, dass der Haltering rund ausgebildet ist, da Behälter zur Aufnahme von Speisen und/oder Getränken zumeist ebenfalls rund ausgebildet sind. Von der Erfindung ebenfalls umfasst ist eine Kühlvorrichtung, deren Haltering eckig, beispielsweise dreieckig, viereckig oder fünfeckig ausgebildet ist.

Es kann weiterhin vorgesehen sein, dass der Haltering derart flexibel ausgebildet ist, dass er in der Form seines Außendurchmessers an unterschiedliche verschließbare Behälter angepasst werden kann. So kann ein und dieselbe Kühlvorrichtung durch Verformung des Halterings beispielsweise sowohl in einem Behälter mit rundem als auch in einem Behälter mit eckig ausgebildetem Innenraum eingesetzt werden. Rund meint sowohl ovale als auch kreisrunde Behälter mit unterschiedlichen Radien.

Entscheidend ist, dass der Haltering eine dem Innenquerschnitt des Behälters kongruente Form annehmen kann.

Dass das Grundgestell den Kühlkörper aufnehmend gestaltet ist, bedeutet im Sinne der vorliegenden Erfindung, dass das Grundgestell dazu ausgebildet ist, den Kühlkörper aufzunehmen. Der Kühlkörper kann dabei fest mit dem Grundgestell verbunden sein oder lösbar mit dem Grundgestell verbindbar.

Gemäß einer bevorzugten Ausführungsform ist der Kühlkörper lösbar und insbesondere formschlüssig mit dem Grundgestell verbindbar.

Die lösbare Verbindung kann dabei insbesondere durch ein Einrasten und/oder Einstecken und/oder Einschrauben erfolgen.

Vorteilhafterweise kann der Kühlkörper dadurch einfach und schnell von dem Grundgestell getrennt und in seiner Kühlkraft erneuert werden, beispielsweise durch Legen in einen Gefrierschrank oder ähnliches. Auch eine separate Reinigung der einzelnen Komponenten wird ermöglicht. Insbesondere eine formschlüssige Verbindung vereinfacht dabei den Aufbau und somit die Reinigung von Kühlkörper und Grundgestell.

Als vorteilhaft wird außerdem eine weitere Ausführungsform erachtet, bei welcher Grundgestell und Kühlkörper in unterschiedlichen Positionen zueinander angeordnet werden können. Grundgestell und Kühlkörper sind somit in ihrer Position relativ zueinander variabel angeordnet. Lässt sich beispielsweise das Grundgestell auf der Achse des Kühlkörpers verschieben und an verschiedenen Punkten befestigen, wird der bestmögliche Sitz in einem konischen Flüssigkeitsaufnahmebehälter erreicht.

Gemäß einer weiteren bevorzugten Ausführungsform ist an dem Grundgestell ein sich von dem Haltering aus konisch zu einem unteren von dem Grundgestell beabstandeten Ende hin erstreckender Mantel angeordnet.

Der Mantel kann dabei an dem unteren vom Grundgestell beabstandeten Ende spitz zulaufen oder in einer Ebene münden, wobei das untere Ende des Mantels vorzugsweise eine geschlossene Linie, insbesondere eine Kreislinie beschreibt.

Der Abstand des unteren Endes zum Grundgestell kann dabei derart groß ausgebildet sein, dass er kleiner ist als die Länge des Kühlkörpers, sodass sich der Mantel mit seinem unteren Ende an einem Umfang des Kühlkörpers abstützt. Vorteilhafterweise erfolgt dadurch eine zusätzliche Stabilisierung des Kühlkörpers in der Kühlvorrichtung, was insbesondere zu einem sicheren Sitz des Kühlkörpers bei einem Schütteln des Trinkgefäßes mit eingesetzter Kühlvorrichtung führt.

Sofern der untere Mantel spitz zuläuft, ist der Abstand des unteren Endes vom Grundgestell vorzugsweise größer als die Länge des Kühlkörpers.

Der Mantel ist insbesondere aus einem flüssigkeitsbeständigen Material, beispielsweise einem Kunststoff oder Edelstahl, ausgebildet.

Es kann ferner vorgesehen sein, dass das Grundgestell an seinem Haltering wenigstens ein Befestigungselement aufweist.

Das Befestigungselement ist zumindest bereichsweise umlaufend und flexibel ausgebildet. Insbesondere ist das Befestigungselement derart ausgebildet, dass ein formschlüssiges Einklemmen des Halterings in die innere Behälterwand des Behälters ermöglicht wird.

"Flexibel" im Sinne der Erfindung meint dabei die Eigenschaft besitzend, sich unter einem nur geringen Kraftaufwand vergleichsweise leicht mechanisch verändern zu lassen. Insbesondere sind von der Bezeichnung flexibel sowohl plastisch verformbare als auch elastisch verformbare Materialien umfasst. Elastisch verformbare Materialien kehren definitionsgemäß nach dem Ende der Krafteinwirkung wieder in ihren Ausgangszustand zurück, während plastisch verformbare Materialien ihre veränderte Form nach Wegfall der Krafteinwirkung beibehalten.

Geeignete Materialien für ein Befestigungselement sind beispielsweise Gummi, Naturkautschuk, Silikon oder eine Mischung aus den genannten Materialien. Insbesondere ist das Befestigungselement, wie vorteilhafterweise auch die anderen Bestandteile der erfindungsgemäßen Kühlvorrichtung, aus einem ungiftigen, lebensmittelverträglichen Material ausgebildet. Dem Fachmann ist bekannt, welche Materialien insbesondere als ungiftig und lebensmittelverträglich infrage kommen.

Vorteilhafterweise gewährleistet das Befestigungselement einen sicheren Sitz der erfindungsgemäßen Kühlvorrichtung in dem Behälter, wobei insbesondere beim Schütteln des Behälters die Kühlvorrichtung nicht verrutscht.

Das Befestigungselement kann weiterhin als Dichtring ausgebildet sein.

Es kann weiterhin vorgesehen sein, dass das Befestigungselement mehrere federnd angeordnete Außenflächen aufweist, die ein Einklemmen der Kühlvorrichtung in den Innenraum des Behälters erlauben.

Vorteilhafterweise wird auch durch die Flexibilität des Befestigungselementes eine Befestigung der Kühlvorrichtung in unterschiedliche Behälter mit Innenräumen, deren Geometrien leicht voneinander abweichen, ermöglicht.

Gemäß einer bevorzugten Ausführungsform ist der Kühlkörper mit einem Kühlmittel gefüllt und/oder befüllbar. Ein Kühlmittel im Sinne der Erfindung ist dabei ein gasförmiger, flüssiger oder fester Stoff oder ein Stoffgemisch, der/das zum Abtransport von Wärme eingesetzt wird. Insbesondere wird durch das in dem Kühlkörper befindliche Kühlmittel Wärme des/der in dem Behälter befindlichen Getränks oder Speise aufgenommen, wodurch es zu einer Temperaturerhöhung und/oder zu einer Änderung des Aggregatzustands des Kühlmittels kommt. Nach der bestimmungsgemäßen Verwendung des Kühlkörpers kann dem Kühlmittel die aufgenommene Wärme wieder entzogen werden, beispielsweise dadurch, dass der Kühlkörper für einen gewissen Zeitraum in eine deutlich kältere Umgebung positioniert wird. Beispielsweise kann ein Kühlkörper, dessen Kühlmittel Wasser enthält, für einen Zeitraum von wenigstens 30 Minuten, bevorzugt wenigstens einer Stunde in ein Gefrierfach oder eine vergleichbare Vorrichtung gelegt werden, wodurch die aufgenommene Wärme wieder abgeführt wird und eine Änderung des Aggregatszustandes herbeigeführt wird.

Vorzugsweise enthält das Kühlmittel Wasser und/oder ein Wasser-Ethanol-Gemisch und/oder 1,2-Propandiol oder eine vergleichbare lebensmittelverträgliche Substanz.

Besonders bevorzugt ist das Kühlmittel in Form einer nicht gefrierbaren Flüssigkeit, beispielsweise einem Wasser-Ethanol-Gemisch ausgeführt. Unter Berücksichtigung des spezifischen Ausdehnungskoeffizienten ist auch eine gefrierende Flüssigkeit, beispielsweise Wasser denkbar. In diesem Fall ist die Füllmenge des Kühlkörpers so zu wählen, dass eine Luftblase im Kühlkörper verbleibt, sodass sich das Kühlmittel während des Gefriervorganges ausdehnen kann, ohne das Volumen des Kühlkörpers zu überschreiten und die Außenwand des Kühlkörpers zum Platzen zu bringen.

Der Kühlkörper ist bevorzugt fluiddicht verschlossen und/oder fluiddicht verschließbar.

Das Fassungsvermögen des Kühlkörpers ist so dimensioniert, dass eine ausreichend große Menge des Kühlmittels aufgenommen werden kann, um eine hinreichende Kühlleistung zu gewährleisten.

Gemäß einer bevorzugten Ausführungsform weist der Mantel wenigstens in einem Teilbereich mehrere erste Durchbrechungen auf. Vorteilhafterweise kommt es beim Schütteln des Behälters zu einer Durchströmung der Durchbrechungen mit dem in dem Behälter aufgenommenen Nahrungsmittel und zu einer Durchmischung der einzelnen Komponenten des Nahrungsmittels. Von der Bezeichnung "Nahrungsmittel" sind im Sinne der Erfindung sowohl Getränke als auch Speisen umfasst. Beispielsweise kann ein aufgenommenes Nahrungsmittel ein Getränk mit einem zugesetzten Nahrungsergänzungsmittel in Form eines Pulvers sein, wobei eine gründliche Durchmischung von Getränk und Pulver angestrebt wird.

Insbesondere eine konische Ausbildung des Mantels führt im Zusammenhang mit über die Mantelfläche verteilten ersten Durchbrechungen zu einer Verbesserung der Durchmischung des im Behälter enthaltenen Nahrungsmittels beim Schütteln des Behälters.

Es kann weiterhin vorgesehen sein, dass das Grundgestell mehrere zweite Durchbrechungen aufweist. Vorteilhafterweise verbessern im Grundgestell angeordnete zweite Durchbrechungen die Durchmischung des im Behälter enthaltenen Nahrungsmittels beim Schütteln des Behälters, wobei sie alternativ oder ergänzend zu den ersten Durchbrechungen ausgebildet sein können.

Die Größe der ersten und/oder zweiten Durchbrechungen kann einheitlich sein oder variieren und ist vom Fachmann für den jeweiligen Anwendungsfall entsprechend zu wählen.

Die Aufgabe wird weiterhin gelöst durch ein Trinkgefäß umfassend
- einen Behälter zur Aufnahme einer Flüssigkeit, der Behälter aufweisend einen Behälterboden, eine sich von dem Behälterboden nach oben erstreckende Behälterwand, welche einen Innenraum des Behälters umschließt, und eine Öffnung zum Befüllen des Behälters mit einer Flüssigkeit,
- einen Deckel zum Verschließen des Behälters, sowie
- eine erfindungsgemäße Kühlvorrichtung,
wobei die Kühlvorrichtung derart in dem Behälter befestigt ist, dass der Kühlkörper in einem Abstand von wenigstens 0,5 cm, bevorzugt wenigstens 1 cm zu der Behälterwand in dem Innenraum des Behälters angeordnet ist.

Vorteilhafterweise liegt der Kühlkörper dadurch nicht an der Außenwand des Behälters an, wodurch das Kondensieren von Flüssigkeit an der Außenwand des Behälters und somit des Trinkgefäßes minimiert wird. Es kommt weiterhin nicht zu einer Reibung oder ähnlicher mechanischer Beeinflussung zwischen Kühlkörper und Behälterwand, wodurch unerwünschte Geräusche und Materialabnutzung vermindert werden.

Bevorzugt ist der Deckel des erfindungsgemäßen Trinkgefäßes fluiddicht mit dem Behälter verschließbar.

Es kann weiterhin vorgesehen sein, dass der Deckel eine verschließbare Trinköffnung aufweist.

Vorteilhafterweise wird eine Kühlung des Getränks (oder alternativ eines anderen Nahrungsmittels, wie beispielsweise einer kalten Suppe) unmittelbar in dem Gefäß ermöglicht, aus dem auch der Verzehr erfolgt.

Gemäß einer weiteren bevorzugten Ausführungsform ist der Behälter wärmeisolierend ausgebildet. Dadurch kann vorteilhafterweise die Aufnahme weiterer Wärmeenergie aus dem Außenraum des Behälters vermindert werden.

Nachfolgend wird die Erfindung anhand von Ausführungsbeispielen und zugehörigen Zeichnungen näher erläutert. Dabei zeigen
Fig. 1: einen schematischen Längsschnitt durch ein erfindungsgemäßes Trinkgefäß mit einer erfindungsgemäßen Kühlvorrichtung;
Fig. 2: einen schematischen Längsschnitt durch eine alternative Ausführungsform eines erfindungsgemäßen Trinkgefäßes;
Fig. 3: einen schematischen Längsschnitt durch eine alternative Ausführungsform eines erfindungsgemäßen Trinkgefäßes mit zwei Grundgestellen ohne Mantel;
Fig. 4: einen schematischen Längsschnitt durch eine alternative Ausführungsform eines erfindungsgemäßen Trinkgefäßes mit drei Grundgestellen;
Fig. 5: einen schematischen Längsschnitt durch einen Kühlkörper einer erfindungsgemäßen Kühlvorrichtung; und
Fig. 6: eine schematische Ansicht des Grundgestells inklusive Befestigungselement und Mantel.

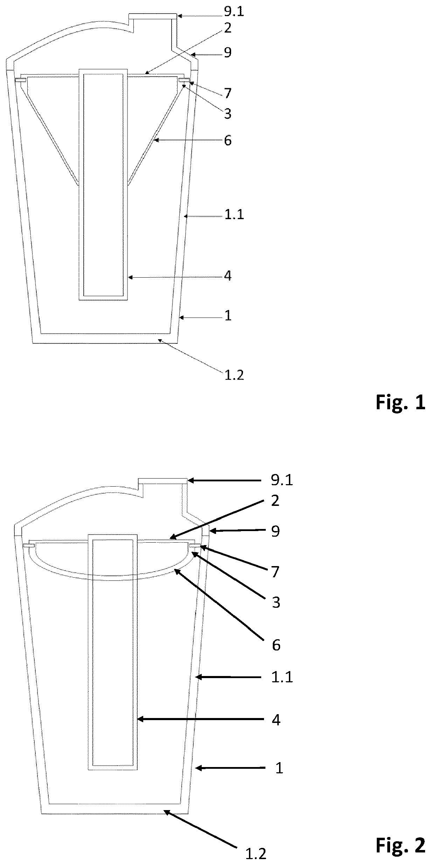

**Figur 1** zeigt einen schematischen Querschnitt durch ein erfindungsgemäßes Trinkgefäß mit einer erfindungsgemäßen Kühlvorrichtung.

Der Kern der vorliegenden Erfindung zur Lösung der gestellten Aufgabe besteht darin, dass in das Trinkgefäß eine Vorrichtung eingesetzt wird, welche die Flüssigkeit im Trinkgefäß sowohl aktiv kühlt als auch beim Schütteln für eine verbesserte Durchmischung von Flüssigkeit und beispielsweise Nahrungsergänzungsmittel sorgt.

Die erfindungsgemäße Kühlvorrichtung besteht in einem Ausführungsbeispiel aus Kunststoff, kann aber auch aus einem anderen Material, wie beispielsweise Edelstahl gefertigt sein. Das Trinkgefäß ist durch einen becherförmigen Flüssigkeitsaufnahmebehälter (Behälter) 1 und einen wasserdicht verschraubbaren Deckel 9 mit verschließbarer Trinköffnung 9.1 gekennzeichnet. Das Trinkgefäß nimmt die erfindungsgemäße Kühlvorrichtung zur aktiven Kühlung und besseren Durchmischung der Getränkebestandteile auf. Der Behälter 1 weist einen Behälterboden 1.2 und eine sich von dem Behälterboden 1.2 nach oben erstreckende Behälterwand 1.1 auf.

Die Kühlvorrichtung weist ein Grundgestell 2 und wenigstens einen Kühlkörper 4 auf, welcher in dem Grundgestell 2 aufgenommen beziehungsweise an diesem angeordnet ist. Das Grundgestell 2 weist einen Haltering 3 mit einem ersten Außendurchmesser auf, welcher ausgebildet ist zum Anlegen an eine innere Behälterwand des verschließbaren Behälters 1.

Kühlkörper 4 und Grundgestell 2 sind gemäß des dargestellten Ausführungsbeispiels so ausgeführt, dass sie zusammengesteckt (formschlüssig verbunden) und leicht wieder getrennt werden können.

Das Grundgestell 2 weist einen Haltering 3 auf, an dem ein Befestigungselement 7 angeordnet ist. Die äußere Form des Halterings 3 und die flexible Ausgestaltung des Befestigungselementes 7, beispielsweise aus Silikon, ermöglichen es, dass die Kühlvorrichtung in nahezu alle herkömmlichen Proteinshaker (als herkömmliche Trinkgefäße) unterschiedlicher Größe eingesetzt werden kann, ohne bei Bewegung oder Schütteln des Trinkgefäßes zu verrutschen, zu klappern oder an die Außenwand des Trinkgefäßes zu schlagen. Dabei dient das Befestigungselement 7 der Befestigung des Grundgestells 2 an der inneren Behälterwand 1.1.

An dem Grundgestell 2 ist ein sich von dem Haltering 3 aus konisch zu einem unteren von dem Grundgestell 2 beabstandeten Ende hin erstreckender Mantel 6 angeordnet. Der Mantel 6 stützt sich in diesem Ausführungsbeispiel mit seinem unteren Ende an einem Umfang des Kühlkörpers 4 ab.

Der Kühlkörper 4 wird innerhalb des Grundgestells 2 so fixiert, dass er nicht an der Außenwand des Trinkgefäßes anliegt und somit das Kondensieren von Flüssigkeit an der Außenwand des Trinkgefäßes minimiert wird.

Der Kühlkörper 4 ist so auszuführen, dass er vorzugsweise formschlüssig oder durch einen Befestigungsmechanismus mit dem Grundgestell 2 einfach verbunden und wieder gelöst werden kann. Der Kühlkörper 4 besteht aus einem wasserfesten, leicht zu reinigenden und frosttauglichen Material, wie beispielsweise Kunststoff oder Edelstahl.

Um das Kühlmittel in dem Kühlkörper 4 zu kühlen oder zu gefrieren, muss dieser in eine Gefriertruhe gestellt werden. Wenn die Flüssigkeit in dem Kühlkörper ausreichend gefroren bzw. gekühlt ist, dient diese als Kältereservoir. Nun kann die Kühlvorrichtung mit dem Grundgestell 2 und dem Mantel 6 in das bereits mit der Flüssigkeit und dem Nahrungsergänzungsmittel oder anderem Pulverförmigen Zusatzstoff gefüllte Trinkgefäß eingesetzt werden.

**Figur 2** zeigt einen schematischen Längsschnitt durch eine alternative Ausführungsform eines erfindungsgemäßen Trinkgefäßes. Die hier dargestellte Ausführungsform ist analog zu der in Figur 1 dargestellten Ausführungsform ausgebildet.

Der an dem Grundgestell 2 angeordnete Mantel 6 erstreckt sich ebenfalls von dem Haltering 3 aus, verläuft jedoch nicht konisch. Der Mantel 6 kann sich dabei vorteilhafterweise am Kühlkörper 4 abstützen.

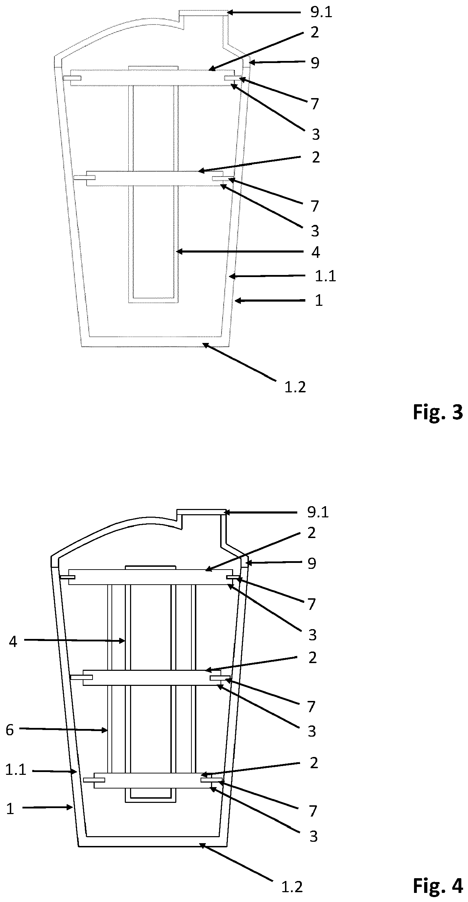

In **Figur 3** ist ein schematischer Längsschnitt durch eine weitere alternative Ausführungsform eines erfindungsgemäßen Trinkgefäßes dargestellt.

Diese Ausführungsform weist keinen Mantel auf.

Im Gegensatz zu der in Figur 1 dargestellten Ausführungsform (mit der sie im Übrigen identisch ist) weist die hier dargestellte Ausführungsform zwei Grundgestelle 2 mit jeweils einem Haltering 3 auf, wobei die Halteringe 3 parallel zueinander angeordnet sind. An jedem Haltering 3 ist ein Befestigungselement 7 angeordnet, welches zur Befestigung des jeweiligen Grundgestells 2 an der inneren Behälterwand 1.1 dient.

**Figur 4** zeigt einen schematischen Längsschnitt durch eine weitere alternative Ausführungsform eines erfindungsgemäßen Trinkgefäßes mit drei Grundgestellen.

Im Gegensatz zu der in Figur 1 dargestellten Ausführungsform weist die hier dargestellte Ausführungsform drei Grundgestelle 2 mit jeweils einem Haltering 3 auf, wobei die Halteringe 3 parallel zueinander angeordnet sind. An jedem Haltering 3 ist ein Befestigungselement 7 angeordnet, welches zur Befestigung des jeweiligen Grundgestells 2 an der inneren Behälterwand 1.1 dient.

Ebenfalls unterschiedlich zu der in Figur 1 dargestellten Ausführungsform ist die Ausbildung des Mantels 6. Dieser erstreckt sich hier vom obersten Grundgestell 2 zum untersten Grundgestell 2 und verläuft dabei nicht konisch, sondern im Wesentlichen parallel zum Kühlkörper 4.

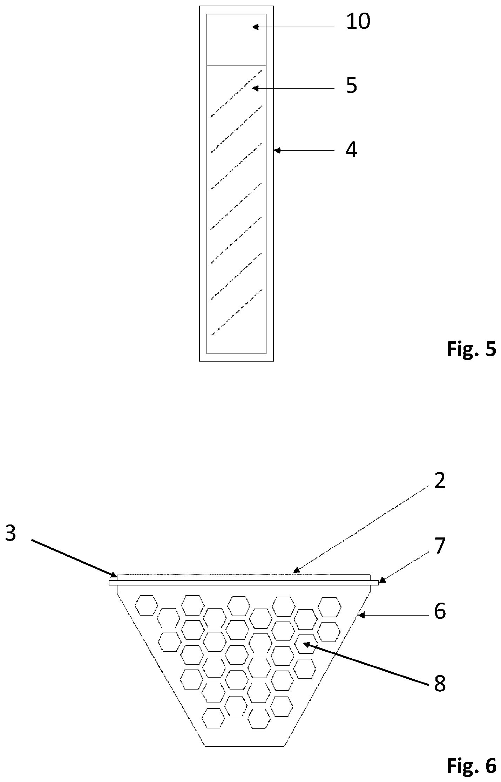

**Figur 5** zeigt einen schematischen Längsschnitt durch einen Kühlkörper 4 einer erfindungsgemäßen Kühlvorrichtung.

Der Kühlkörper 4 kann länglich ausgeführt sein. Im vorliegenden Ausführungsbeispiel ist der Kühlkörper 4 zylinderförmig ausgebildet, eine eckige Form ist jedoch ebenso denkbar. Der Kühlkörper 4 ist innen hohl und kann entweder mit einem Kühlmittel 5 befüllt und mit einer fest verschlossen Außenwand, oder mit einem Kühlmittel 5 befüllbar und mit einer fluiddicht wiederverschließbaren Außenwand ausgeführt sein. Das Fassungsvermögen des Kühlkörpers 4 ist so dimensioniert, dass eine ausreichend große Menge des Kühlmittels 5 aufgenommen werden kann, um eine hinreichende Kühlleistung zu generieren. Ist der Kühlkörper 4 zu groß, reduziert sich das nutzbare Volumen des Trinkgefäßes. In Abhängigkeit des Volumens des Trinkgefäßes besitzt der Kühlkörper 4 vorzugsweise ein Fassungsvermögen zwischen 50 - 150 ml.

Das Kühlmittel 5 ist vorzugsweise in Form einer nicht gefrierbaren Flüssigkeit, beispielsweise einem Wasser-Ethanol-Gemisch ausgeführt. Unter Berücksichtigung des spezifischen Ausdehnungskoeffizienten ist auch eine gefrierende Flüssigkeit, beispielsweise Wasser denkbar. In diesem Fall ist die Füllmenge so zu wählen, dass ein Luftraum 10 im Kühlkörper 4 verbleibt, sodass sich das Kühlmittel 5 während des Gefriervorganges ausdehnen kann, ohne das Volumen des Kühlkörpers 4 zu überschreiten und die Außenwand zum Platzen zu bringen.

Durch die Oberfläche des Kühlkörpers 4 und des darin gespeicherten Kühlmittels 5 findet ein Wärmeaustausch statt. Dadurch kühlt die zu kühlende Trinkflüssigkeit ab. Dies geschieht, ohne dass es zum Flüssigkeitsaustausch zwischen dem Kühlkörper 4 und dem Behälter 1 kommt. Dieses Verfahren hat den Vorteil, dass beim Kühlen das Getränk beziehungsweise das Nahrungsmittel nicht verwässert oder verunreinigt wird.

Die Durchmischung von Flüssigkeit und Nahrungsergänzungsmittel sowie ggf. weiteren Zutaten erfolgt mittels eines oder mehrerer Siebeinsätze. Eine schematische Ansicht des Grundgestells 2 inklusive Befestigungselement 7 und Mantel 6 ist in **Fig. 6** dargestellt. Der Mantel 6 weist mehrere Seitenflächen oder eine gebogene Außenfläche auf, in welchen/welcher zahlreiche erste Durchbrechungen 8 ausgebildet sind. Der Mantel 6 kann eine vieleckige oder runde Grundfläche aufweisen, welche in dem Grundgestell 2 angeordnet ist und mit zweiten Durchbrechungen durchsetzt sein kann, um das Durchströmen des Getränks zu ermöglichen.

Infolge der Kombination von Grund- und Seitenflächen (Grundgestell 2 und Mantel 6) werden beim Schütteln des Trinkgefäßes immer mehrere Siebflächen von der Flüssigkeit durchströmt und so das Durchmischen des Getränks verbessert.

Der Siebeinsatz, bestehend aus Grundgestell 2 und Mantel 6, ist aufgrund der Kombination mehrerer Siebflächen geeignet, Flüssigkeit und Pulver gegenüber dem Stand der Technik besonders effektiv zu mischen und Verklumpung vorzubeugen, womit eine bessere Konsistenz des Shakes erreicht wird.

Der Mantel 6 besteht (ebenso wie das Grundgestell 2) vorzugsweise aus Kunststoff oder einem anderen wasserfesten, strapazierfähigen und leicht zu reinigenden Material. Durch eine Öffnung vorzugsweise in dem Grundgestell 2 kann der Kühlkörper 4 (in Fig. 3 nicht dargestellt) in das Grundgestell 2 eingesteckt werden und mittels Formschluss oder eines Befestigungsmechanismus' lösbar verbunden werden.

Mittels eines flexiblen Befestigungselementes 7 an der Außenkante des Grundgestells 2, im Ausführungsbeispiel durch lebensmittelechtes Silikon, wird die Position von Grundgestell 2 und Kühlkörper 4 im Trinkgefäß fixiert.

### Bezugszeichenliste

- 1: Behälter
- 1.1: Behälterwand
- 1.2: Behälterboden
- 2: Grundgestell
- 3: Haltering
- 4: Kühlkörper
- 5: Kühlmittel
- 6: Mantel
- 7: Befestigungselement
- 8: erste Durchbrechungen
- 9: Deckel
- 9.1: Trinköffnung
- 10: Luftraum

## Patentansprüche

1. Kühlvorrichtung zum Einsetzen in einen verschließbaren Behälter (1), die Kühlvorrichtung umfassend
• ein Grundgestell (2) aufweisend einen Haltering (3) mit einem ersten Außendurchmesser, welcher ausgebildet ist zum Anlegen an eine innere Behälterwand (1.1) des verschließbaren Behälters (1), und
• wenigstens einen Kühlkörper (4), welcher zur Aufnahme eines Kühlmittels (5) ausgebildet ist,
wobei das Grundgestell (2) den Kühlkörper (4) aufnehmend gestaltet ist.

2. Kühlvorrichtung nach Anspruch 1, wobei der Kühlkörper (4) lösbar und insbesondere formschlüssig mit dem Grundgestell (2) verbindbar ist.

3. Kühlvorrichtung nach Anspruch 1 oder 2, wobei an dem Grundgestell (2) ein sich von dem Haltering (3) aus konisch zu einem unteren von dem Grundgestell (2) beabstandeten Ende hin erstreckender Mantel (6) angeordnet ist.

4. Kühlvorrichtung nach einem der Ansprüche 1 bis 3, wobei das Grundgestell (2) an seinem Haltering (3) wenigstens ein Befestigungselement (7) aufweist.

5. Kühlvorrichtung nach Anspruch 4, wobei das Befestigungselement (7) zumindest bereichsweise umlaufend und flexibel ausgebildet ist.

6. Kühlvorrichtung nach einem der Ansprüche 1 bis 5, wobei der Kühlkörper (4) mit einem Kühlmittel (5) gefüllt und/oder befüllbar ist.

7. Kühlvorrichtung nach Anspruch 6, wobei das Kühlmittel (5) Wasser und/oder ein Wasser-Ethanol-Gemisch und/oder 1,2-Propandiol enthält.

8. Kühlvorrichtung nach einem der Ansprüche 1 bis 7, wobei der Kühlkörper (4) fluiddicht verschlossen und/oder fluiddicht verschließbar ist.

9. Kühlvorrichtung nach einem der Ansprüche 1 bis 8, wobei der Mantel (6) wenigstens in einem Teilbereich mehrere erste Durchbrechungen (8) aufweist.

10. Kühlvorrichtung nach einem der Ansprüche 1 bis 9, wobei das Grundgestell (2) mehrere zweite Durchbrechungen aufweist.

11. Kühlvorrichtung nach Anspruch 9 oder 10, wobei die ersten Durchbrechungen (8) und/oder die zweiten Durchbrechungen siebartig ausgebildet sind.

12. Trinkgefäß umfassend
• einen Behälter (1) zur Aufnahme einer Flüssigkeit, der Behälter (1) aufweisend einen Behälterboden (1.2), eine sich von dem Behälterboden (1.2) nach oben erstreckende Behälterwand (1.1), welche einen Innenraum des Behälters (1) umschließt, und eine Öffnung zum Befüllen des Behälters (1) mit einer Flüssigkeit,
• einen Deckel (9) zum Verschließen des Behälters (1), sowie
• eine Kühlvorrichtung nach einem der Ansprüche 1 bis 11,
wobei die Kühlvorrichtung derart in dem Behälter (1) befestigt ist, dass der Kühlkörper (4) in einem Abstand von wenigstens 0,5 cm, bevorzugt wenigstens 1 cm zu der Behälterwand (1.1) in dem Innenraum des Behälters (1) angeordnet ist.

13. Trinkgefäß nach Anspruch 12, wobei der Deckel (9) fluiddicht mit dem Behälter (1) verbindbar ist.

14. Trinkgefäß nach Anspruch 12 oder 13, wobei der Deckel (9) eine verschließbare Trinköffnung (9.1) aufweist.

15. Trinkgefäß nach einem der Ansprüche 12 bis 14, wobei der Behälter (1) wärmeisolierend ausgebildet ist.
